# EUROPÄISCHE PATENTSCHRIFT

(11) **EP 0 991 486 B1**
(45) Veröffentlichungstag und Bekanntmachung des Hinweises auf die Patenterteilung: **09.10.2002**
(21) Anmeldenummer: 98934976.6
(22) Anmeldetag: 18.06.1998
(51) Int. Cl.: B21K 1/76, F16H 55/26

(54) **VERFAHREN ZUM HERSTELLEN EINER ZAHNSTANGE**
METHOD FOR PRODUCING A RACK
PROCEDE DE PRODUCTION D'UNE CREMAILLERE

(30) Priorität: 24.06.1997 DE 19726697
(43) Veröffentlichungstag der Anmeldung: 12.04.2000
(73) Patentinhaber: ZF FRIEDRICHSHAFEN Aktiengesellschaft, 88038 Friedrichshafen (DE)
(72) Erfinder: BREITWEG, Werner, D-73529 Bargau (DE); KOZIARA, Bernd, D-73550 Waldstetten (DE); BRENNER, Alfred, D-73540 Heubach (DE)
(74) Vertreter: Wiechmann, Manfred
(86) Internationale Anmeldenummer: EP9803724
(87) Internationale Veröffentlichungsnummer: WO98058754

(56) Entgegenhaltungen:
- EP-A- 0 499 135
- EP-A- 0 765 793
- DE-A- 3 202 254
- FR-A- 2 530 571
- US-A- 4 296 641
- US-A- 5 429 202

## Beschreibung

Die Erfindung betrifft ein Verfahren zum Herstellen einer Zahnstange für Zahnstangenlenkungen für Kraftfahrzeuge und eine Zahnstange, die nach einem solchen Verfahren hergestellt ist.

Ein derartiges Verfahren ist beispielsweise aus der DE 32 02 254 C2 bekannt. Bei diesem Verfahren wird aus einem zylindrischen Rohling zwischen einem Ober- und einem Unterwerkzeug eine Zahnstange durch Taumelschmieden hergestellt. Bei diesem Verfahren entsteht, wie bei allen Schmiede- und Preßverfahren, ein Grat, der bei dem bekannten Verfahren gezielt als Erweiterung des Zahnstangenquerschnittes verwendet wird. Dadurch wird zwar das Widerstandsmoment der Zahnstange erhöht, aber auch der erforderliche Bauraum vergrößert.

Bei Zahnstangenlenkungen von Kraftfahrzeugen besteht immer wieder die Forderung nach kleinerem Bauraum und nach Gewichtseinsparung.

Der Erfindung liegt die Aufgabe zugrunde, eine Zahnstange und ein Herstellverfahren für eine solche Zahnstange anzugeben, mit der ein Beitrag zur Erfüllung der beiden Forderungen nach kleinerem Bauraum und Gewichtseinsparung geleistet werden kann.

Diese Aufgabe wird durch das im Anspruch 1 offenbarte Verfahren und durch die in Anspruch **3** gekennzeichnete Zahnstange gelöst.

Das Verfahren zum Herstellen einer solchen Zahnstange beginnt mit der Auswahl eines Rohlings für die Zahnstange, der wenigstens im Bereich der Zahnstangenverzahnung eine von einem Kreiszylinder abweichende Form aufweist. Die Größe und Form des Querschnittes des Rohlings werden derart gewählt, daß die Kontur der fertigen Zahnstange im Verzahnungsbereich nicht über einen durch die Abmessungen benachbarter Teile der Zahnstangenlenkung vorgegebenen Hüllkreis hinausragt. Danach wird die Zahnstange durch ein Taumelschmiedeverfahren aus dem Rohling umgeformt. Nach dem Abschluß des Taumelschmiedens weist die Zahnstange in ihrem Verzahnungsbereich außerhalb der Verzahnung ein konkaves Längsprofil auf, das während des Taumelschmiedens zum Abstützen der Taumelmomente dient.

Zweckmäßige und vorteilhafte Weiterbildungen des Verfahrens sind in den Unteranspruch 2 angegeben. Das Längsprofil, das während des Taumelschmiedens zum Abstützen der Taumelmomente und bei der fertigen Zahnstange durch eine genaue Führung und Abstützung an einem Druckstück der Zahnstangenlenkung als Funktionsverbesserung dient, kann während des Taumelschmiedens in den Rohling eingearbeitet werden. Dadurch ist es möglich, einen Rohling mit einer relativ einfachen Außenkontur zu verwenden. Es besteht jedoch die Möglichkeit, dieses Längsprofil bereits vor dem Taumelschmieden, beispielsweise durch ein Präge-, Zieh- oder Walzverfahren, in den Rohling einzuarbeiten, so kann das Taumelschmieden auf die eigentliche Umformung des Rohlings in dem Verzahnungsbereich der Zahnstange beschränkt werden. Die Forderung, daß die Kontur der fertigen Zahnstange im Verzahnungsbereich nicht über einen bestimmten Hüllkreis hinausragen soll, kann dadurch erfüllt werden, daß der Rohling im Verzahnungsbereich der Zahnstange wenigstens zwei zueinander geneigte Abflachungen oder zwei im wesentlichen symmetrisch zueinander angeordnete Einschnürungen des Querschnittes aufweist. Zur weiteren Gewichtseinsparung kann in dem Rohling wenigstens im Verzahnungsbereich der Zahnstange wenigstens ein Hohlraum vorgesehen sein, der sich in Längsrichtung der Zahnstange erstreckt.

Da bei dem erfindungsgemäßen Verfahren ein geringerer Umformgrad erreicht wird, kann ein Werkstoff mit geringerer Duktilität verwendet werden, Dadurch können zusätzlich noch die Kosten für die Zahnstange gesenkt werden.

Eine nach diesem Verfahren hergestellte Zahnstange weist, wie andere Zahnstangen auch, einen Verzahnungsbereich und wenigstens einen Lager- und Führungsbereich auf. Die nach dem erfindungsgemäßen Verfahren hergestellte Zahnstange weist jedoch eine Kontur auf, die im Verzahnungsbereich nicht über einen durch die Abmessungen benachbarter Teile der Zahnstangenlenkung vorgegebenen Hüllkreis hinausragt. Der Durchmesser des Hüllkreises wird bei einer Zahnstangen-Hilfskraftlenkung beispielsweise durch den Innendurchmesser einer in dem Lager- und Führungsbereich der Zahnstange angeordneten Dichtung vorgegeben. Das konkave Längsprofil im Verzahnungsbereich der Zahnstange wird zweckmäßigerweise durch eine Längsnut gebildet, die an der Außenumfangsfläche der Zahnstange an der der Verzahnung gegenüberliegenden Seite der Zahnstange liegt.

Im folgenden wird die Erfindung anhand mehrerer in der Zeichnung dargestellter Ausführungsbeispiele näher erläutert.

Es zeigen:
- Fig. 1: einen Teil-Längsschnitt durch eine Zahnstangen-Hilfskraftlenkung;
- Fig. 2: einen Querschnitt nach der Linie II-II in Fig. 1 und
- Fig. 3 bis 6: verschiedene Querschnittsformen eines Rohlings für eine Zahnstange.

Obwohl die Erfindung anhand einer Zahnstangen-Hilfskraftlenkung mit hydraulischer Hilfskraftunterstützung beschrieben wird, kann sie auch bei Zahnstangenlenkungen mit elektrischer oder ohne Hilfskraftunterstützung angewendet werden.

In einem Lenkgehäuse 1 ist ein Ritzel 2 in zwei Lagern 3 und 4 drehbar gelagert. Das Ritzel 2 steht über seine Verzahnung in Eingriff mit einer Zahnstange 5, die in dem Lenkgehäuse 1 axial verschiebbar geführt ist. Die Zahnstange 5 wird mit Hilfe eines federbelasteten Druckstückes 6 in bekannter Weise gegen die Verzahnung des Ritzels 2 gedrückt.

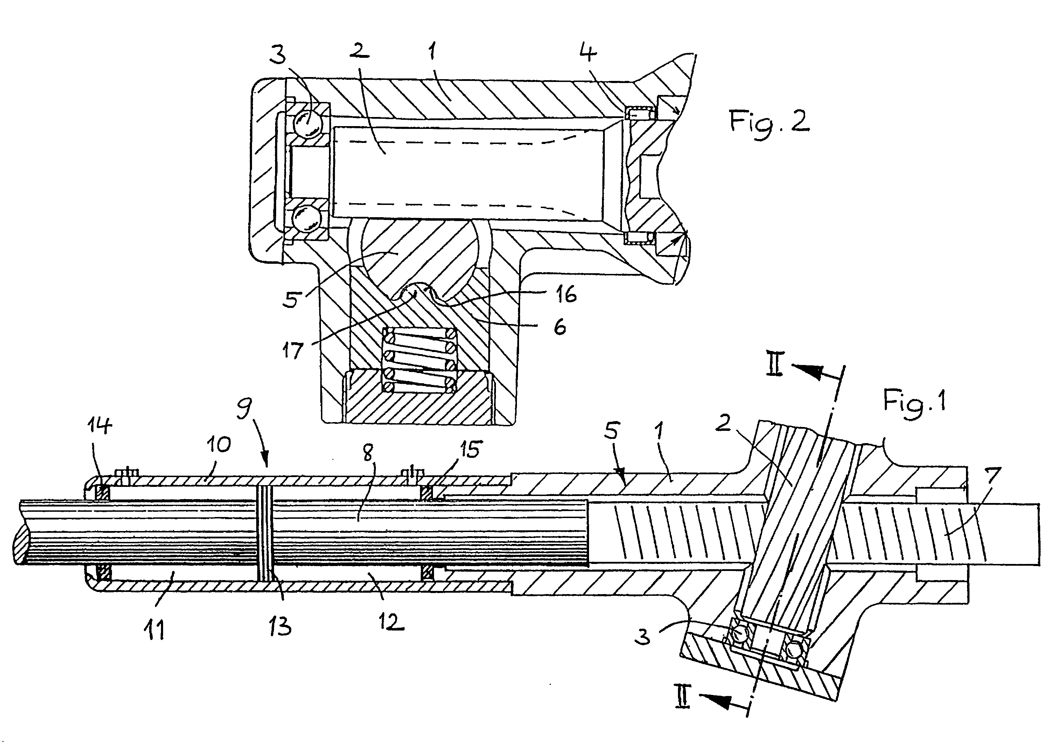

Die Zahnstange 5 weist einen Verzahnungsbereich 7 und wenigstens einen Lager- und Führungsbereich 8 auf. Der Lager- und Führungsbereich 8 ist in dem Ausführungsbeispiel der Fig. 1, in dem eine Zahnstangen-Hilfkraftlenkung dargestellt ist, gleichzeitig die Kolbenstange eines Servomotors 9. Der Servomotor 9 enthält in seinem Zylinder 10 zwei Zylinderräume 11 und 12, die durch einen Kolben 13 voneinander getrennt sind. Die Zylinderräume 11 und 12 sind nach außen gegenüber dem Lager- und Führungsbereich 8 der Zahnstange 5 durch Dichtungen 14 und 15 abgedichtet.

Die Zahnstange 5 weist in ihrem Verzahnungsbereich an der Außenumfangsfläche an der Seite, die der Verzahnung gegenüberliegt, eine Längsnut 16 auf. Die Längsnut 16 arbeitet mit einer an dem Druckstück 6 angeformten Längsnase 17 zusammen. Durch das Zusammenwirken der Längsnut 16 und der Längsnase 17 wird ein Kippen der Zahnstange 5 im Betrieb verhindert. Mit gleicher Wirkung können diese beiden Elemente vertauscht werden, so daß die Längsnase an der Zahnstange 5 und die Längsnut an dem Druckstück 6 angeordnet sind.

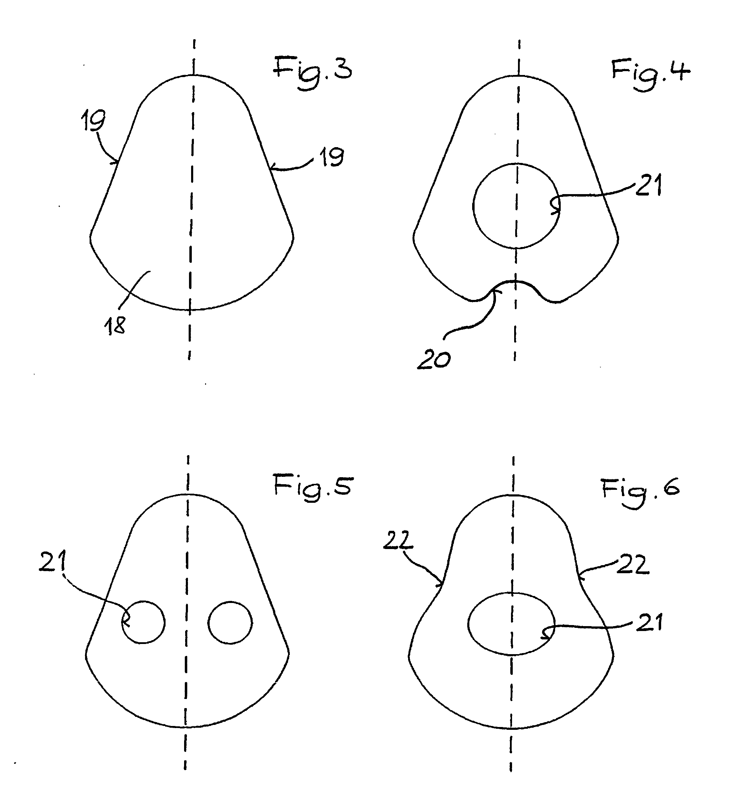

Im folgenden wird das Verfahren zum Herstellen einer solchen Zahnstange beschrieben. Zunächst ist es wichtig, daß ein Rohling 18 ausgewählt wird, der wenigstens im Bereich der zukünftigen Verzahnung der Zahnstange eine von einem Kreiszylinder abweichende Form aufweist. Einige Möglichkeiten für den Querschnitt eines solchen Rohlings 18 sind in den Fig. 3 bis 6 in vergrößertem Maßstab dargestellt. Wesentlich bei der Auswahl des Rohlings-Querschnittes ist, daß seine Größe und Form derart gewählt werden, daß die Kontur der fertigen Zahnstange in ihrem Verzahnungsbereich nicht über einen durch die Abmessungen benachbarter Teile der Zahnstangenlenkung vorgegebenen Hüllkreis hinausragt. Bei einer Zahnstange, die für eine Zahnstangen-Hilfskraftlenkung beispielsweise nach Fig. 1 vorgesehen ist, ist der Durchmesser des Hüllkreises durch den Innendurchmesser der Dichtung 15 vorgegeben, die den Zylinderraum 12 auf dem Lager- und Führungsbereich 8 der Zahnstange 5 abdichtet.

Bei der Ausführung nach Fig. 3 weist der Rohling im Verzahnungsbereich der Zahnstange zwei zueinander geneigte Abflachungen 19 auf. Diese Abflachungen 19 sind zweckmäßigerweise symmetrisch zueinander angeordnet. In einem weiteren Verfahrensschritt wird die Zahnstange durch Taumelschmieden aus dem Rohling 18 umgeformt. Um den Rohling 18 während des Taumelschmiedens gegenüber den Taumelmomenten abzustützen, wird zu Beginn des Taumelschmiedens ein konkaves Längsprofil in der Form der späteren Längsnut 16 in den Rohling 18 und damit in die Zahnstange 5 eingearbeitet.

Dieser Verfahrensschnitt kann entfallen, wenn der Rohling 18 bereits im Rohzustand eine Längsnut 20 aufweist, die in Fig. 4 dargestellt ist. Eine solche Längsnut 20 kann unabhängig von der sonstigen Ausgestaltung des Rohlings 18 auch in den anderen Ausführungsformen des Rohlings enthalten sein.

In den Ausführungsbeispielen nach Fig. 4 bis 6 weist der Rohling 18 jeweils wenigstens einen Hohlraum 21 auf, der sich in Längsrichtung des Rohlings wenigstens im Verzahnungsbereich der Zahnstange erstreckt. In Fig. 5 ist der Hohlraum 21 auf zwei Hohlräume aufgeteilt, in Fig. 6 hat er eine ovale Form.

Anstelle der beiden zueinander geneigten Abflachungen 19 besitzt der Rohling 18 in dem Ausführungsbeispiel nach Fig. 6 zwei im wesentlichen symmetrisch zueinander angeordnete Einschnürungen 22, so daß sich in etwa ein birnenförmiger Querschnitt ergibt.

Anstelle der einen Längsnut 20 kann der Rohling auch zwei oder mehr entsprechend kleinere Längsnuten aufweisen. Ebenso ist es möglich, zwei oder mehr derartige Längsnuten während des Taumelschmiedens einzuarbeiten.

### Bezugszeichen

- 1: Lenkgehäuse
- 2: Ritzel
- 3: Lager
- 4: Lager
- 5: Zahnstange
- 6: Druckstück
- 7: Verzahnungsbereich
- 8: Lager- und Führungsbereich
- 9: Servomotor
- 10: Zylinder
- 11: Zylinderraum
- 12: Zylinderraum
- 13: Kolben
- 14: Dichtung
- 15: Dichtung
- 16: Längsnut
- 17: Längsnase
- 18: Rohling
- 19: Abflachung
- 20: Längsnut
- 21: Hohlraum
- 22: Einschnürung

## Patentansprüche

1. Verfahren zum Herstellen einer Zahnstange (5) für eine Zahnstangenlenkung für Kraftfahrzeuge mit folgenden Schritten:
• Auswahl des Zahnstangenrohlings nach folgenden Kriterien:
- ein Rohling (18) für die Zahnstange (5) hat wenigstens im Bereich von deren Verzahnung eine von einem Kreiszylinder abweichende Form;
- der Rohling (18) weist im Verzahnungsbereich (7) der Zahnstange (5) wenigstens zwei zu einander geneigte und im wesentlichen symmetrisch zu einander angeordnete Abflachungen (19) oder wenigstens zwei im wesentlichen symmetrisch zu einander angeordnete Einschnürungen (22) des Querschnittes auf;
- der Rohling (18) weist einen Querschnitt auf, der in seiner Fläche kleiner gewählt wird als die Fläche eines durch die Abmessungen benachbarter Teile der Zahnstangenlenkung vorgegebenen, die Kontur der fertigen Zahnstange (5) im Verzahnungsbereich (7) umfassenden Hüllkreises;
• in den Rohling wird im späteren Verzahnungsbereich (7) vor oder zu Beginn des Taumelschmiedens außerhalb der Verzahnung ein konkaves Längsprofil eingearbeitet;
• die Zahnstange (5) wird durch Taumelschmieden aus dem Rohling (18) umgeformt, wobei das konkave Längsprofil während des gesamten Taumelschmiedens zum Abstützen der Taumelmomente dient.

2. Verfahren nach Anspruch **1, dadurch gekennzeichnet, daß** der Rohling (18) wenigstens im Verzahnungsbereich (7) der Zahnstange (5) wenigstens einen sich in Längsrichtung der Zahnstange erstreckenden Hohlraum (21) aufweist.

3. Zahnstange für Zahnstangenlenkungen für Kraftfahrzeuge, mit einem Verzahnungsbereich (7) und wenigstens einem Lager- und Führungsbereich (8), **dadurch gekennzeichnet, daß** sie durch ein Verfahren nach einem der Ansprüche 1 bis **2** hergestellt ist und daß das Längsprofil durch wenigstens eine an der Außenumfangsfläche der Zahnstange (5) und der Verzahnung gegenüber liegende Längsnut (16) gebildet ist.

## Claims

1. Method for the production of a rack (5) for a rack-and-pinion steering system for motor vehicles, with the following steps:
• selection of the rack blank according to the following criteria:
- a blank (18) for the rack (5) has, at least in the region of the toothing of the latter, a shape which deviates from a circular cylinder;
- the blank (18) has, in the toothing region (7) of the rack (5), at least two flattenings (19) inclined to one another and arranged essentially symmetrically to one another or at least two contractions (22) of the cross section which are arranged essentially symmetrically to one another;
- the blank (18) has a cross section which is selected smaller in area than the area of an enveloping circle predetermined by the dimensions of adjacent parts of the rack-and-pinion steering system and surrounding the contour of the finished rack (5) in the toothing region (7);
• a concave longitudinal profile is worked into the blank in the subsequent toothing region (7), outside the toothing, prior to or at the commencement of tumble forging;
• the rack (5) is formed from the blank (18) by tumble forging, the concave longitudinal profile serving for supporting the tumble moments during the entire tumble forging.

2. Method according to Claim 1, **characterized in that** the blank (18) has, at least in the toothing region (7) of the rack (5), at least one cavity (21) extending in the longitudinal direction of the rack.

3. Rack for rack-and-pinion steering systems for motor vehicles, with a toothing region (7) and with at least one bearing and guiding region (8), **characterized in that** it is produced by means of a method according to one of Claims 1 and 2, and **in that** the longitudinal profile is formed by at least one longitudinal groove (16) lying on the outer circumferential surface of the rack (5) and opposite the toothing.

## Revendications

1. Procédé de production d'une crémaillère (5) pour une direction à crémaillère pour des véhicules automobiles, comportant les étapes suivantes:
· choix de l'ébauche de crémaillère selon les critères suivants:
- une ébauche (18) pour la crémaillère (5) a au moins dans la région de sa denture une forme s'écartant d'un cylindre circulaire;
- l'ébauche (18) présente dans la région de la denture (7) de la crémaillère (5) au moins deux plats (19) inclinés l'un vers l'autre et disposés de façon sensiblement symétrique l'un par rapport à l'autre ou au moins deux étranglements (22) de la section transversale disposés de façon sensiblement symétrique l'un par rapport à l'autre;
- l'ébauche (18) présente une section transversale, que l'on choisit avec une aire plus petite que l'aire d'un cercle externe comprenant le contour de la crémaillère terminée (5) dans la région de la denture (7) et prédéterminé par les dimensions de pièces voisines de la direction à crémaillère;
· un profil longitudinal concave est usiné dans l'ébauche dans la région de la future denture (7), en dehors de la denture, avant ou au début du forgeage oscillant;
· la crémaillère (5) est façonnée par forgeage oscillant à partir de l'ébauche (18), le profil longitudinal concave servant à soutenir les moments de nutation pendant tout le forgeage oscillant.

2. Procédé suivant la revendication 1, **caractérisé en ce que** l'ébauche (18) présente au moins dans la région de la denture (7) de la crémaillère (5) au moins un espace creux (21) s'étendant dans le sens longitudinal de la crémaillère.

3. Crémaillère pour des directions à crémaillère pour des véhicules automobiles, avec une région de denture (7) et au moins une région d'appui et de guidage (8), **caractérisée en ce qu'**elle est fabriquée par un procédé suivant l'une des revendications 1 à 2 et **en ce que** le profil longitudinal est formé par au moins une rainure longitudinale (16) située sur la face latérale extérieure de la crémaillère (5) et à l'opposé de la denture.
